# EUROPÄISCHE PATENTSCHRIFT

(11) **EP 2 113 989 B1**
(45) Veröffentlichungstag und Bekanntmachung des Hinweises auf die Patenterteilung: **12.10.2011**
(21) Anmeldenummer: 09100186.7
(22) Anmeldetag: 16.03.2009
(51) Int. Cl.: H02K 7/20, H02K 11/00, H02K 9/06

(54) **Drehmomentstütze zur Befestigung des Gehäuses eines Drehgebers an einem Elektromotor**
Torque support to fix an encoder housing to an electric machine
Support de couple pour la fixation d'un boîtier de codeur sur une machine électrique

(30) Priorität: 30.04.2008 DE 102008021829
(43) Veröffentlichungstag der Anmeldung: 04.11.2009
(73) Patentinhaber: SICK STEGMANN GmbH, 78166 Donaueschingen (DE)
(72) Erfinder: Siraky, Josef, 78166 Donaueschingen (DE); Freidinger, Michaela, 78183 Hüfingen (DE); Wölfle, Bernhard, 78073 Bad Dürrheim/Öfingen (DE)
(74) Vertreter: Ludewigt, Christoph

(56) Entgegenhaltungen:
- EP-A- 0 400 241
- DE-U1- 29 920 785
- US-A- 3 883 759

## Beschreibung

Die Erfindung betrifft eine Drehmomentstütze zur axial und radial federnden, aber drehmomentsteifen Befestigung des Gehäuses eine Drehgebers an dem Lüftungsgitter eines Elektromotors gemäß dem Oberbegriff des Anspruchs 1.

Drehgeber werden vielfach dazu verwendet, winkelabhängige Größen der rotierenden Welle eines Elektromotors zu messen, z.B. um den Elektromotor für einen Servoantrieb zu steuern. Die Eingangswelle des Drehgebers wird dabei starr mit der Welle des Elektromotors gekoppelt. Das Gehäuse des Drehgebers wird mit dem Gehäuse des Elektromotors gekoppelt. Um Fluchtungsfehler aufzunehmen, werden Drehmomentstützen verwendet, die eine radiale und axiale federnde Bewegung des Gehäuses des Drehgebers gegenüber dem Gehäuse des Elektromotors zulassen, jedoch eine drehmomentsteife Verbindung bewirken.

Aus der DE 299 20 785 U1 ist eine solche Drehmomentstütze der eingangs genannten Gattung bekannt. Die Drehmomentstütze weist einen Streifen aus einem federelastischen Metall auf, dessen erstes Ende an dem Gehäuse des Drehgebers befestigt ist und der von diesem Gehäuse in Bezug zur Rotationsachse des Drehgebers radial absteht. Das zweite Ende des Streifens ist über Spreizdübel in dem Lüftungsgitter des Elektromotors klemmbar. Der Streifen ist in Bezug zur Rotationsachse des Drehgebers in axialer Richtung elastisch federnd verbiegbar und weist eine bügelförmige Krümmung auf, die eine elastisch federnde radiale Verformung zulässt. Um das zweite Ende an dem Lüftungsgitter festzulegen, müssen die Spreizdübel in das Lüftungsgitter eingesetzt werden und Spreizschrauben müssen durch das zweite Ende in die Spreizdübel eingedreht werden. Die Drehmomentstütze benötigt somit zahlreiche Einzelteile, die die Herstellung und die Montage aufwändig machen.

Der Erfindung liegt die Aufgabe zugrunde, eine Drehmomentstütze zu schaffen, die aus einer möglichst geringen Anzahl von Einzelteilen besteht und einfach und zuverlässig montiert werden kann.

Diese Aufgabe wird erfindungsgemäß gelöst durch eine Drehmomentstütze mit den Merkmalen des Anspruchs 1.

Vorteilhafte Ausführungen der Erfindung sind in den Unteransprüchen angegeben.

Der wesentliche Gedanke der Erfindung besteht darin, als Drehmomentstütze wenigstens einen Streifen aus einem federelastischen Material zu verwenden, der mit seinem ersten Ende an dem Gehäuse des Drehgebers befestigt ist und der mit seinem zweiten Ende an dem Lüftungsgitter des Elektromotors festlegbar ist. Der Streifen ist so radial und axial gebogen, dass er radial und axial federnd verformbar ist, in Rotationsrichtung des Drehgebers jedoch unverbiegbar ist. Der Streifen kann somit radiale und axiale Bewegungen des Gehäuses des Drehgebers aufnehmen, verbindet dieses Gehäuse jedoch drehmomentsteif mit dem Lüftungsgitter und damit dem Gehäuse des Elektromotors. Bei der Montage des Drehgebers wird der Streifen elastisch so vorgespannt, dass sein zweites Ende unter einer axialen Federkraft des vorgespannten Streifens gegen die Fläche des Lüftungsgitters gedrückt wird. An diesem zweiten Ende ist wenigstens ein Vorsprung ausgebildet, der durch diese axiale Federkraft in die Rasteröffnungen des Lüftungsgitters gedrückt wird, wobei der Vorsprung keilförmig ausgebildet ist, so dass er sich in den Rasteröffnungen des Lüftungsgitters zumindest in der Drehrichtung spielfrei festklemmt.

Die Drehmomentstütze besteht somit nur aus einem einzigen Streifen z. B. aus Metall, der an dem Gehäuse des Drehgebers befestigt wird. Bei der Montage des Drehgebers klemmt sich der Streifen der Drehmomentstütze selbsttätig in dem Lüftungsgitter fest und verbindet sich dadurch drehmomentfest mit dem Lüftungsgitter. Zur Befestigung des Streifens an dem Lüftungsgitter werden keine zusätzlichen Befestigungselemente benötigt und es sind keine zusätzlichen Montageschritte zur Festlegung des Streifens an dem Lüftungsgitter erforderlich. Die Drehmomentstütze kann somit kostengünstig hergestellt werden und vereinfacht und rationalisiert die Montage des Drehgebers.

In der einfachsten Ausführung genügt ein Streifen aus dem federelastischen Material als Drehmomentstütze. Gegebenenfalls können auch zwei solche Streifen verwendet werden, die in Bezug auf die Rotationsachse des Drehgebers diametral zueinander angeordnet sind, oder drei solcher Streifen, die dann jeweils um 120° gegeneinander versetzt angeordnet sind.

In einer vorteilhaften Ausführung ist der Streifen U-förmig gebogen, wobei ein Schenkel an dem Gehäuse des Drehgebers befestigt wird, während der andere Schenkel sich an dem Lüftungsgitter anlegt. Die beiden Schenkel sind so auseinander- gespreizt, dass sie bei der Montage des Drehgebers elastisch zusammengedrückt werden, wodurch die Vorspannung erzeugt wird, die den das zweite Ende bildenden Schenkel mit einer axialen Federkraft gegen das Lüftungsgitter drückt und den keilförmigen Vorsprung in die Rasteröffnungen des Lüftungsgitters drückt. Die U-förmige Ausbildung des Streifens ermöglicht eine platzsparende Anordnung der Drehmomentstütze, da diese axial zwischen dem Gehäuse des Drehgebers und dem Lüftungsgitter des Elektromotors angeordnet werden kann und nicht oder nur wenig radial über die Außenkontur des Gehäuses des Drehgebers hinausragen muss. Besonders günstig ist es dabei wenn die Schenkel des U-förmig gebogenen Streifens in Bezug auf die Rotationsachse des Drehgebers radial nach außen gerichtet sind. Prinzipiell wäre aber eine Ausrichtung nach innen auch denkbar.

Die an dem zweiten Ende des Streifens ausgebildeten Vorsprünge können unterschiedlich gestaltet sein. Vorteilhaft ist es, wenn diese Vorsprünge einstückig an dem Streifen angeformt sind, da hierdurch die Herstellungskosten minimiert werden können. Die Vorsprünge ragen im Wesentlichen senkrecht von dem zweiten Ende des Streifens ab, so dass sie bei der Montage gegen das Lüftungsgitter des Elektromotors gerichtet sind und im Wesentlichen senkrecht zur Ebene des Lüftungsgitters in die Rasteröffnungen eindringen. Wesentlich ist, dass die Vorsprünge in ihrer Breite in Rotationsrichtung des Drehgebers, d.h. in der Tangentialrichtung eine Breite aufweisen, die auf die Abmessungen der Rasteröffnungen des Lüftungsgitters in dieser Richtung abgestimmt ist und sich gegen das eindringende freie Ende der Vorsprünge keilförmig verringert. Die Vorsprünge können sich auf diese Weise in den Rasteröffnungen verkeilen und das zweite Ende des Streifens zumindest in Bezug auf die Rotationsrichtung, d.h. tangential zum Umfang des Drehgebergehäuses spielfrei an dem Lüftungsgitter fixieren.

In einer einfachen Ausführung werden die Vorsprünge durch aus dem zweiten Ende abgebogene Laschen gebildet. Diese Laschen können aus der Fläche des Streifens ausgestanzt sein. Vorzugsweise werden die Laschen durch den abgebogenen Endrand des Streifens gebildet. Die Lasche kann dabei in ihrer Breite der lichten Innenbreite einer Rasteröffnung entsprechen, so dass sich die Lasche mit ihren keilförmig ausgebildeten Kanten an den beiden Rändern der Rasteröffnung verkeilt. Weist der Streifen eine größere Breite auf, was im Hinblick auf die Drehmomentsteifigkeit von Vorteil sein kann, so kann der Vorsprung auch in zwei oder mehr nebeneinander liegende Rasteröffnungen eindringen. Die keilförmig ausgebildeten äußeren Kanten der Lasche verklemmen sich dann an den entsprechenden Innenrändern der jeweils äußeren Rasteröffnungen. Um das Eindringen der Lasche in mehrere Rasteröffnungen zu ermöglichen, weist die Lasche in diesem Falle eine entsprechende Anzahl von Aussparungsschlitzen auf, die die zwischen den Rasteröffnungen liegenden Rasterstege aufnimmt.

In einer anderen Ausführung sind die Vorsprünge als aus der Fläche des zweiten Ende des Streifens durch Tiefziehen herausgedrückte zylindrische Ränder ausgebildet, deren äußere Mantelfläche sich gegen das freie Ende des Randes hin keilförmig verringert. Der Außendurchmesser des zylindrischen Randes ist so bestimmt, dass sich dieser an den Innenrändern der Rasteröffnung anlegt und an diesen Innenrändern verkeilt. Dies ist insbesondere bei quadratischen Rasteröffnungen vorteilhaft. Überdeckt die Breite des Streifens mehrere Rasteröffnungen, so können entsprechend zwei oder mehr Vorsprünge in Form von zylindrischen Rändern vorgesehen werden. Um eventuelle Maßtoleranzen im Abstand der Vorsprünge oder im Raster des Lüftungsgitters ausgleichen zu können, kann dabei die Lasche zwischen den Vorsprüngen geschlitzt sein, so dass sich der Abstand der Vorsprünge in der Rotationsrichtung soweit verformen kann, dass solche Maßtoleranzen aufgenommen werden können.

Im Folgenden wird die Erfindung anhand von in der Zeichnung dargestellten Ausführungsbeispielen näher erläutert. Es zeigen
- Fig. 1 und Fig. 2: zwei Ansichten einer Drehmomentstütze in einer ersten Ausführung,
- Fig. 3: den montierten Drehgeber mit der Drehmomentstütze in dieser ersten Ausführung,
- Fig. 4 und Fig. 5: zwei Ansichten der Drehmomentstütze in einer zweiten Ausführung,
- Fig. 6: den montierten Drehgeber mit der Drehmomentstütze in dieser zweiten Ausführung und
- Fig. 7: eine abgewandelte Ausführung der Drehmomentstütze der Fig. 1.

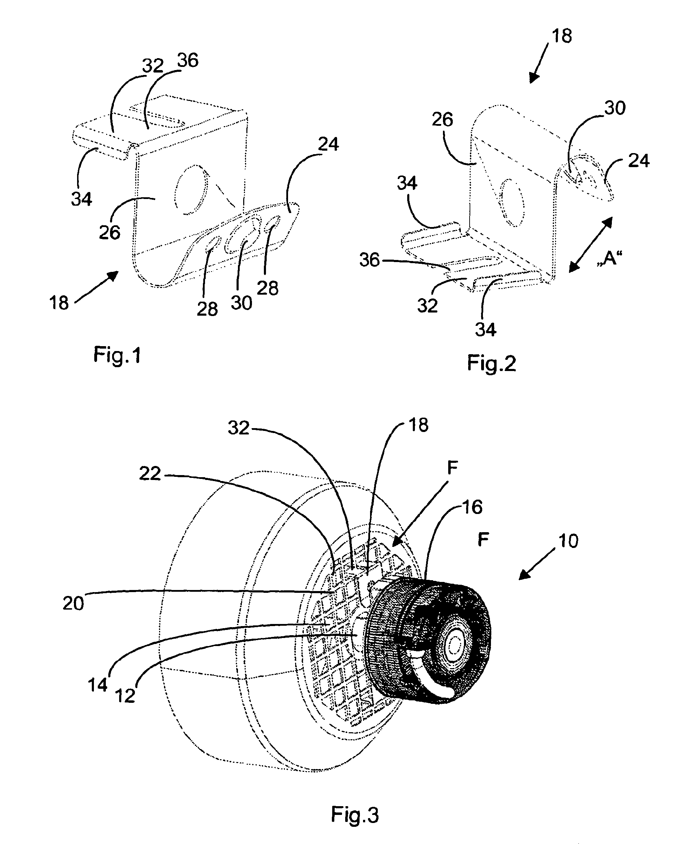

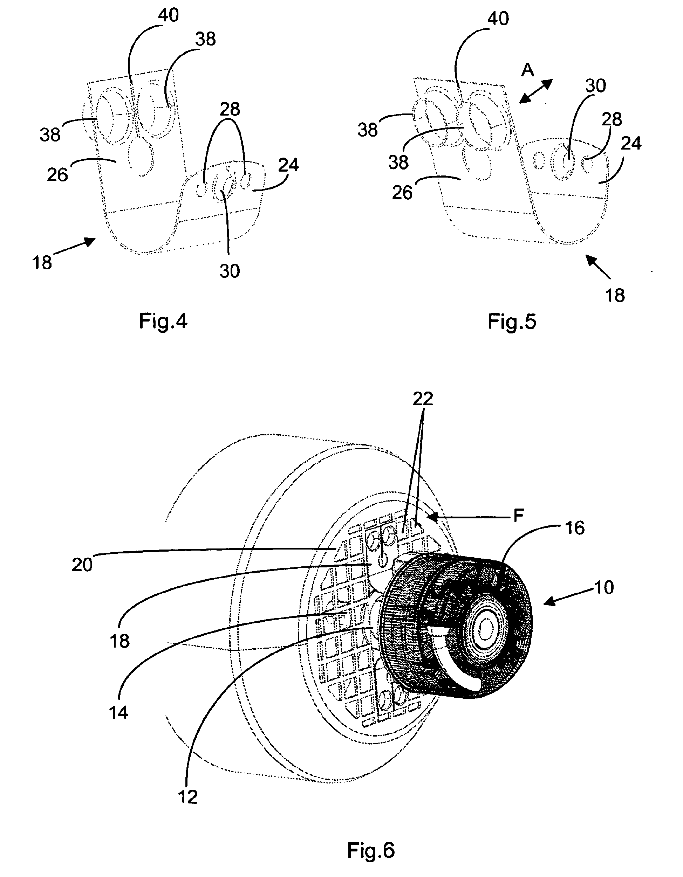

Wie in den Figuren 3 und 6 gezeigt ist, wird ein Drehgeber 10 an einem Elektromotor montiert. Die Eingangswelle 12 des Drehgebers 10 wird starr mit der Welle 14 des Elektromotors gekuppelt. Das Gehäuse 16 des Drehgebers 10 wird mittels einer nachfolgend beschriebenen Drehmomentstütze 18 an einem Lüftungsgitter 20 festgelegt, welches in dem Gehäuse 22 des Elektromotors ausgebildet ist. Das Lüftungsgitter 20 besteht aus einem Raster von Rasteröffnungen 22, die beispielsweise quadratischen Querschnitt haben.

In den Figuren 1 bis 3 ist eine erste Ausführung der Drehmomentstütze 18 gezeigt.

Die Drehmomentstütze 18 ist einstückig aus einem Streifen eines federelastischen Materials geformt, insbesondere aus einem Blech aus einem federelastischen Metall durch Stanzen und Biegen hergestellt. Alternativ kann die Drehmomentstütze 18 auch aus Kunststoff oder einem anderen federelastischen Material bestehen. Metall hat jedoch eine hohe Stabilität. Die Breite des Streifens ist so gewählt, dass ein Verbiegen des Streifens in der Ebene des Bleches nicht möglich ist. Senkrecht zur Ebene des Bleches ist eine elastisch federnde Verformung möglich. Der Streifen der Drehmomentstütze 18 weist ein erstes Ende 24 und ein zweites Ende 26 auf. Der Streifen ist U-förmig gebogen, so dass sein erstes Ende 24 einen ersten Schenkel und sein zweites Ende 26 einen zweiten Schenkel bilden. In dem ersten Ende 24 sind Bohrungen 28 ausgebildet, die dazu dienen, das erste Ende 24 auf Positionierzapfen an der Stirnfläche des Gehäuses 16 des Drehgebers zu positionieren. Eine Senkbohrung 30 dient zur Aufnahme einer Senkschraube, mit welcher das Ende 24 an dem Gehäuse 16 des Drehgebers angeschraubt wird.

Der freie Endrand des zweiten Endes 26 ist in Form einer Lasche 32 abgebogen und ragt in der von dem ersten Ende 24 abgewandten Richtung senkrecht von dem zweiten Ende 26 ab. Die beiden Seitenkanten 34 der Lasche 32 sind so abgeschrägt, dass sich die Breite der Lasche 32 von ihrem Ansatz an dem zweiten Ende 26 gegen ihr freies Ende hin leicht keilförmig verringert. Die beiden Seitenkanten 34 sind eingebördelt, um eine glatte äußere Gleitfläche zu bilden. Die Breite der Lasche 32, d.h. der Abstand der Seitenkanten 34 entspricht dem lichten Abstand der voneinander abgewandten Innenkanten zweier nebeneinander liegender Rasteröffnungen 22 des Lüftungsgitters 20. In der Mitte der Lasche 32 ist ein Aussparungsschlitz 36 vorgesehen, der sich über die gesamte Länge der Lasche 32 erstreckt.

Bei der Montage des Drehgebers 10 wird zunächst die Drehmomentstütze 18 an dem Drehgeber 10 befestigt. Hierzu wird das erste Ende 24 mittels der Bohrungen 28 und der Senkschraube an der Stirnfläche des Gehäuses 16 des Drehgebers 10 positioniert und angeschraubt oder in sonstiger Weise befestigt. Die U-förmige Biegung des Streifens der Drehmomentstütze 18 ist so gewählt, dass in dem in Figur 1 gezeigten entspannten Zustand der Drehmomentstütze 18 die beiden durch das erste Ende 24 bzw. das zweite Ende 26 gebildeten Schenkel spitzwinklig auseinandergespreizt sind. Der Drehgeber 10 wird dann an dem Elektromotor montiert, wozu die Eingangswelle 12 des Drehgebers 10 axial auf der Welle 14 des Elektromotors positioniert und mit dieser Welle 14 starr verbunden wird. In dieser axialen Position des Drehgebers 10 bezüglich des Elektromotors ist der axiale Abstand zwischen der Stirnfläche des Gehäuses 16 des Drehgebers 10 und dem Lüftungsgitter 20 des Elektromotors kleiner als der Abstand der Enden 24 und 26 der Drehmomentstütze 18. Der durch das zweite Ende 26 gebildete Schenkel der Drehmomentstütze wird daher gegen den an dem Gehäuse 16 des Drehgebers befestigten durch das erste Ende 24 gebildeten Schenkel gedrückt, wie dies in Figur 2 durch den Doppelpfeil A angezeigt ist. Durch diese elastische Verformung erhält die Drehmomentstütze 18 eine Vorspannung, durch welche das zweite Ende 26 mit einer in Figur 3 durch den Pfeil F angedeuteten axial gerichteten Federkraft gegen das Lüftungsgitter 20 gedrückt wird. Dabei greift die Lasche 32 in zwei benachbarte Rasteröffnungen 22 des Lüftungsgitters 20 ein. Auf Grund der Breite der Lasche 32 und der keilförmigen Abschrägung ihrer Seitenkanten 34 wird die Lasche 32 durch diese axiale Federkraft F soweit in die Rasteröffnungen 22 eingedrückt, bis sich die Seitenkanten 34 spielfrei an den Innenrändern der Rasteröffnungen 22 festklemmen. Der zwischen den beiden Rasteröffnungen 22 liegende Rastersteg wird dabei mit Spiel in dem Aussparungsschlitz 36 der Lasche 32 aufgenommen, wie dies in Figur 3 zu sehen ist.

Die Drehmomentstütze 18 ist an dem Gehäuse 16 des Drehgebers so befestigt, dass die Schenkel des ersten Endes 24 und des zweiten Endes 26 in Bezug auf die Rotationsachse des Drehgebers 10 radial verlaufen und der Scheitelpunkt der U-förmigen Krümmung nach innen oder außen gegen die Eingangswelle 12 des Drehgebers hin gerichtet ist. Damit befindet sich die Drehmomentstütze 18 nahezu vollständig in dem Zwischenraum zwischen dem Gehäuse 16 des Drehgebers 10 und dem Lüftungsgitter 20 und innerhalb der Außenkontur des Gehäuses 16. Durch die vorspringende Lasche 32 ist die Drehmomentstütze 18 in Rotationsrichtung, d.h. in der Tangentialrichtung des Drehgebers 10 spielfrei in dem Lüftungsgitter 20 fixiert. Das Gehäuse 16 des Drehgebers 10 ist somit drehmomentsteif an dem Lüftungsgitter 20 festgelegt, während der U-förmig gebogene Streifen aus dem elastisch federnden Metall eine axiale und radiale Ausgleichsbewegung des Gehäuses 16 des Drehgebers in Bezug auf das Gehäuse des Elektromotors mit dem Lüftungsgitter 20 zulässt.

In den Figuren 4 bis 6 ist ein zweites Ausführungsbeispiel der Drehmomentstütze 18 gezeigt. Soweit dieses Ausführungsbeispiel mit dem ersten Ausführungsbeispiel der Figuren 1 bis 3 übereinstimmt, sind die gleichen Bezugszeichen verwendet und auf die vorangehende Beschreibung des ersten Ausführungsbeispiels wird Bezug genommen.

Das zweite Ausführungsbeispiel unterscheidet sich von dem ersten Ausführungsbeispiel nur in der Ausbildung der Vorsprünge des das zweite Ende 26 bildenden Schenkels der Drehmomentstütze 18. Wie die Figuren 4 und 5 zeigen, sind in dem freien Ende des zweiten Endes 26 nebeneinander zwei kreisförmige Durchbrüche ausgestanzt, deren Rand 38 jeweils aus der Ebene des zweiten Endes 26 herausgedrückt ist und zylindrisch in der von dem ersten Ende 24 abgewandten Richtung von dem zweiten Ende 26 vorspringt. Der Durchmesser der ausgestanzten Durchbrüche ist so gewählt, dass der Außenumfang der Ränder 38 dem lichten Innenquerschnitt der Rasteröffnungen 22 entspricht. Der Außenumfang der Ränder 38 verringert sich dabei im Durchmesser geringfügig keilförmig gegen das freie Ende der Ränder 38 hin. Der Abstand der ausgestanzten Durchbrüche entspricht dem Rasterabstand der Rasteröffnungen 22 des Lüftungsgitters.

Wie aus Figur 6 ersichtlich ist, greifen bei der Montage des Drehgebers 10 die durch die Ränder 38 gebildeten Vorsprünge jeweils in zwei benachbarte Rasteröffnungen 22 des Lüftungsgitters 20 und werden aufgrund der keilförmigen Abschrägung ihres Außenumfangs und der axial wirkenden Federkraft F in die Rasteröffnungen 22 eingepresst und verklemmen sich keilförmig in diesen Rasteröffnungen 22.

Um eventuelle Maßtoleranzen in der Anordnung der Ränder 38 und in der Anordnung der Rasteröffnungen 22 auszugleichen, ist das zweite Ende 26 zwischen den vorspringenden Rändern 38 axial geschlitzt. Der Schlitz 40 erlaubt eine geringfügige gegenseitige Bewegung der Ränder 38, so dass ihr Abstand sich entsprechend eventueller Maßtoleranzen geringfügig ändern kann.

Weist die Drehmomentstütze zwei oder drei federelastische Streifen auf, so können diese in der Weise ausgebildet sein, wie dies in den Fig. 1 und 2 bzw. den Fig. 4 und 5 gezeigt ist. Die Streifen sind dabei jeweils separat mit ihren ersten Enden 24 an dem Gehäuse 16 des Drehgebers befestigt.

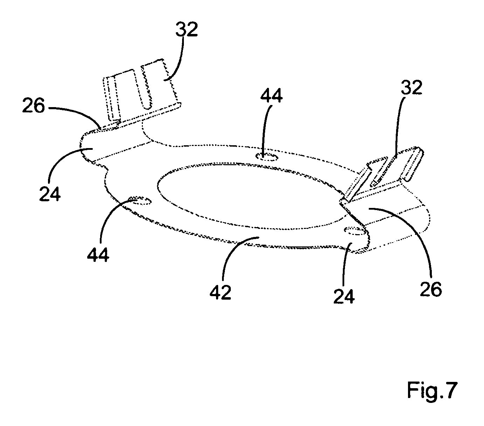

Vorteilhaft ist es jedoch, wenn die zwei oder mehr Streifen einstückig an einer gemeinsamen Kreisscheibe 42 angeformt sind, wie dies in Fig. 7 gezeigt ist. Die Kreisscheibe 42 mit den Streifen kann dabei als ein einziges Stanz-Biege-Teil hergestellt werden.

Die Kreisscheibe 42 weist dabei Bohrungen 44 auf, die zur Befestigung am Gehäuse 16 des Drehgebers dienen. Eine Drehmomentstütze mit zwei oder drei Streifen hat den Vorteil, dass der Federdruck der Streifen nicht asymmetrisch auf das Lager des Drehgebers 10 wirkt. Die Befestigung mittels einer Kreisscheibe 42 kann außerdem bei kleinen Durchmessern des Drehgebers 10 von Vorteil sein, selbst wenn nur ein Streifen an der Kreisscheibe 42 angeformt ist.

### Bezugszeichenliste

- 10: Drehgeber
- 12: Eingangswelle des Drehgebers
- 14: Welle des Elektromotors
- 16: Gehäuse des Drehgebers
- 18: Drehmomentstütze

- 20: Lüftungsgitter
- 22: Rasteröffnungen
- 24: erstes Ende
- 26: zweites Ende
- 28: Bohrungen

- 30: Senkbohrung
- 32: Lasche
- 34: Seitenkanten
- 36: Aussparungsschlitz
- 38: Rand

- 40: Schlitz
- 42: Kreisscheibe
- 44: Bohrungen

## Patentansprüche

1. Drehmomentstütze zur axial und radial federnden, aber drehmomentsteifen Befestigung des Gehäuses (16) eines Drehgebers (10) an dem Lüftungsgitter (20) eines Elektromotors mit wenigstens einem Streifen aus einem federelastischen Material, dessen erstes Ende (24) an dem Gehäuse (16) des Drehgebers (10) befestigt ist, dessen zweites Ende (26) an dem Lüftungsgitter (20) festlegbar ist, der in Bezug zur Rotationsachse des Drehgebers (10) radial und axial gebogen und federnd verformbar ist und der in Rotationsrichtung des Drehgebers (10) unverbiegbar ist,
**dadurch gekennzeichnet, dass** der Streifen im montierten Zustand elastisch vorgespannt ist, so dass sein zweites Ende (26) unter einer zur Rotationsachse des Drehgebers (10) parallelen axialen Federkraft (F) gegen das Lüftungsgitter (20) gedrückt ist, und dass an dem zweiten Ende (26) wenigstens ein Vorsprung (32 bzw. 38) ausgebildet ist, der durch diese axiale Federkraft (F) in die Rasteröffnungen (22) des Lüftungsgitters (20) gedrückt wird und sich **dadurch** in den Rasteröffnungen (22) zumindest in Rotationsrichtung spielfrei keilförmig festklemmt.

2. Drehmomentstütze nach Anspruch 1, **dadurch gekennzeichnet, dass** der wenigstens eine Streifen U-förmig gebogen ist, dass ein Schenkel des Streifens das an dem Gehäuse (16) des Drehgebers (10) befestigbare erste Ende (24) bildet, dass der das zweite Ende (26) bildende andere Schenkel an dem Lüftungsgitter (20) flächig anliegt, dass die beiden Schenkel bei der Montage zusammengedrückt werden sodass der zweite Schenkel unter der **dadurch** aufgebauten axialen Federkraft (F) flächig gegen das Lüftungsgitter (20) gedrückt wird, und dass der wenigstens eine keilförmige Vorsprung (32 bzw. 38) an dem zweiten Schenkel angeformt ist und von diesem gegen die Ebene des Lüftungsgitters (20) absteht.

3. Drehmomentstütze nach Anspruch 2,
**dadurch gekennzeichnet, dass** der wenigstens eine U-förmig gebogene Streifen so angeordnet ist, dass seine Schenkel in Bezug auf die Rotationsachse des Drehgebers (10) radial nach außen gerichtet sind.

4. Drehmomentstütze nach einem der Ansprüche 1 bis 3,
**dadurch gekennzeichnet, dass** der wenigstens eine Vorsprung durch eine am zweiten Ende (26) des Streifens abgebogene Lasche (32) gebildet ist, deren Breite dem Rastermaß des Lüftungsgitters (20) in Rotationsrichtung entspricht und sich gegen das in die Rasteröffnung (22) eindringende freie Ende hin keilförmig verringert.

5. Drehmomentstütze nach Anspruch 4,
**dadurch gekennzeichnet, dass** die Lasche (32) der abgebogene Endrand des zweiten Endes (26) ist.

6. Drehmomentstütze nach Anspruch 4 oder 5,
**dadurch gekennzeichnet, dass** die Breite der Lasche (32) der lichten Breite zwischen den voneinander abgewandten Innenränder wenigstens zweier aneinander anschließende Rasteröffnungen (22) entspricht, dass die äußeren Seitenkanten (34) der Lasche (32) die keilförmige Klemmung bewirken und dass die Lasche (32) wenigstens einen Aussparungsschlitz (36) aufweist, der die zwischen den Rasteröffnungen (22) liegenden Rasterstege aufnimmt.

7. Drehmomentstütze nach einem der Ansprüche 1 bis 3,
**dadurch gekennzeichnet, dass** der wenigstens eine Vorsprung durch einen aus dem zweiten Ende (26) herausgedrückten zylindrischen Rand (38) gebildet ist, dessen Außendurchmesser dem lichten Innenquerschnitt der Rasteröffnungen (22) entspricht und sich gegen das in die Rasteröffnung (22) eindringende freie Ende hin keilförmig verringert.

8. Drehmomentstütze nach Anspruch 7,
**dadurch gekennzeichnet, dass** das zweite Ende (26) wenigstens zwei durch zylindrische Ränder (38) gebildete Vorsprünge aufweist und dass das zweite Ende (26) zwischen den Rändern (38) jeweils geschlitzt (Schlitz 40) ist, wodurch sich der Abstand der Ränder (38) in Rotationsrichtung geringfügig ändern kann.

9. Drehmomentstütze nach Anspruch 1,
**dadurch gekennzeichnet, dass** das federelastische Material Metall ist.

10. Drehmomentstütze nach einem der Ansprüche 1 bis 9,
**dadurch gekennzeichnet, dass** das erste Ende (24) jedes Streifens separat an dem Gehäuse (16) des Drehgebers (10) befestigt ist.

11. Drehmomentstütze nach einem der Ansprüche 1 bis 9,
**dadurch gekennzeichnet, dass** die ersten Enden (24) der Streifen einstückig an einer Kreisscheibe (42) angeformt sind, die an dem Gehäuse (16) des Drehgebers (10) befestigt ist.

## Claims

1. Torque support for the axial and radial resilient but torque rigid attachment of the housing (16) of a rotary encoder (10) to a ventilation grid (20) of an electric motor comprising at least one strip made of an elastic material, a first end (24) thereof is fixed to the housing(16) of the encoder (10), a second end (26) is fixed to the ventilation grid (20), the strip is radially and axially bent and is elastically deformable in relation to the rotational axis of the encoder (10) and it is non-deformable in the direction of rotation of the encoder (10),
**characterized in that**, the strip is elastically prestressed in a mounted condition, so that its second end (26) is pressed against the ventilation grid (20) by an elastic force (F) which is axial and parallel to the rotational axis of the encoder (10), and **in that** at least one protrusion (32, 38) is formed at the second end (26), which is pressed into grid openings (22) of the ventilation grid (20) by said axial elastic force (F) and thereby locks itself free of play and taperedly at least in the rotational direction into the grid openings (22).

2. Torque support according to claim 1, **characterized in that** the at least one strip is bent to a U shape, **in that** one arm of the strip forms the first end (24) fixable to the housing (16) of the encoder (10), **in that** the other arm forming the second end (26) lies flat against the ventilation grid (20), **in that** both arms are pressed together during mounting, so that the second arm is pressed flat against the ventilation grid (20) by the applied axial elastic force (F), and **in that** the at least one tapered protrusion (32, 38) is formed at the second arm and extends therefrom against the level of the ventilation grid (20).

3. Torque support according to claim 2, **characterized in that**, the at least one U shaped strip is arranged, so that its arms are extending radially to the outside in relation to the rotational axis of the encoder (10).

4. Torque support according to any one of claims 1 to 3, **characterized in that**, the at least one protrusion is formed by a lug (32) bend at the second end (26) of the strip, which width corresponds to the spacing of the ventilation grid (20) in the rotational direction and the width reduces taperedly towards the free end intruding into the grid opening (22).

5. Torque support according to claim 4, **characterized in that**, the lug (32) is the bended end rim of the second end (26).

6. Torque support according to any one of claims 4 or 5, **characterized in that**, the width of the lug (32) corresponds to the clear width between the averted inner rims of at least two neighbouring grid openings (22), **in that** the outer side edges (34) of the lug (32) cause the tapered clamping and **in that** the lug (32) comprises at least a cut-out slit (36), which accommodates the grid bars lying between the grid openings (22).

7. Torque support according to any one of claims 1 to 3, **characterized in that**, the at least one protrusion is formed by a cylindrical rim punched out of the second end (26), its outer diameter corresponds to the clear inner cross section of the grid openings (22) and reduces taperedly towards the free end intruding into the grid opening (22).

8. Torque support according to claim 7, **characterized in that**, the second end (26) comprises at least two protrusions formed by cylindrical rims (38) and **in that** the second end (26) is slit (slit 40) between the rims (38) respectively, whereby the clearance between the rims (38) in the rotational direction can change slightly.

9. Torque support according to claim 1, **characterized in that**, the elastic material is metal.

10. Torque support according to one of claims 1 to 9, **characterized in that**, the first end (24) of each strip is fixed separately to the housing (16) of the encoder (10).

11. Torque support according to one of claims 1 to 9, **characterized in that**, the first ends (24) of the strips are formed integrally with a circular disc (42), which is attached to the housing (16) of the encoder (10).

## Revendications

1. Support de couple de rotation pour l'attachement axialement et radialement élastique mais du couple rigide du boîtier (16) d'un encodeur rotatif (10) à une grille de ventilation (20) d'un moteur électrique comprenant au moins une bande constituée d'un matériau élastique, dont sa première extrémité (24) est fixée au boîtier (16) de l'encodeur (10), dont sa deuxième extrémité (26) est fixée à la grille de ventilation (20), la bande est radialement et axialement pliée et est déformable élastiquement par rapport à l'axe de rotation de l'encodeur (10) et il est non déformable dans le sens de rotation de l'encodeur (10), **caractérisé en ce que**, dans un état monté la bande est élastiquement précontrainte, de sorte que sa deuxième extrémité (26) est pressée contre la grille d'aération (20) par une force élastique (F) qui est axial et parallèle à l'axe de rotation de l'encodeur (10), et **en ce qu'**au moins une protubérance (32, 38) est formée à la seconde extrémité (26), qui est pressée dans les orifices de trames (22) de la grille de ventilation (20) par ladite force élastique axiale (F) à travers de cela la protubérance se bloque sans marge de manoevre et cunéiformement dans les orifices de trames (22) au moins dans le sens de rotation.

2. Support de couple de rotation selon la revendication 1, **caractérisé en ce que** la bande est pliée à une forme de U, **en ce qu'**un bras de la bande forme la première extrémité (24) fixable au boîtier (16) de l'encodeur (10), **en ce que** l'autre bras qui forme la deuxième extrémité (26) repose à plat contre la grille de ventilation (20), **en ce que** les deux bras sont compressés au cours du montage, de sorte que le second bras est reposé a plat contre la grille de ventilation (20) par l'application de la force élastique axiale (F), et **en ce que** la protubérance cunéiforme (32, 38) est formée au deuxième bras et s'élève vers le niveau de la grille de ventilation (20).

3. Support de couple de rotation selon la revendication 2, **caractérisé en ce que**, la bande formée de U est arrangée **en ce que** ses bras sont élevés radialement vers l'extérieur par rapport à l'axe de rotation de l'encodeur (10).

4. Support de couple de rotation selon l'une quelconque des revendications 1 à 3, **caractérisé en ce que**, la protubérance est formée par une languette (32) qui est pliée à la seconde extrémité (26) de la bande, dont sa largeur correspond à la dimension de trames de la ventilation de la grille (20) dans le sens de rotation et la largeur se diminue cunéiformement vers l'extrémité libre qui s'introduit dans l'orifice de trames (22).

5. Support de couple de rotation selon la revendication 4, **caractérisé en ce que**, la languette (32) est le rebord plié de la deuxième extrémité (26).

6. Support de couple de rotation selon l'une quelconque des revendications 4 ou 5, **caractérisé en ce que**, la largeur de la languette (32) correspond à la largeur libre entre des bordes intérieurs conjurés d'au moins deux orifices de trames (22), **en ce que** les bordes extérieurs (34) de la languette (32) provoquent le serrage cunéiforme et **en ce que** la languette (32) comporte au moins une échancrure (36), qui accueille les barres de trames située entre les orifice de trames (22).

7. Support de couple de rotation selon l'une quelconque des revendications 1 à 3, **caractérisé en ce que**, la protubérance est formée par un rebord cylindrique poinçonné de la deuxième extrémité (26), son diamètre extérieur correspond à la section transversale intérieure libre de l'orifice de trames (22) et se réduit cunéiformement vers l'extrémité libre qui s'introduit dans l'orifice de trames (22).

8. Support de couple de rotation selon la revendication 7, **caractérisé en ce que**, la seconde extrémité (26) comporte au moins deux protubérances qui sont formées par des bordes cylindriques (38) et **en ce que** la seconde extrémité (26) est encochée respectivement (échancrure 40) entre les bordes (38), selon lequel la distance entre les bordes (38) peut changer légèrement dans le sens de rotation.

9. Support de couple de rotation selon la revendication 1, **caractérisé en ce que**, le matériau élastique est en métal.

10. Support de couple de rotation selon l'une des revendications 1 à 9, **caractérisé en ce que**, la première extrémité (24) de chaque bande est fixée individuellement au boîtier (16) de l'encodeur (10).

11. Support de couple de rotation selon l'une des revendications 1 à 9, **caractérisé en ce que**, les premières extrémités (24) des bandes sont formées intégralement avec un disque circulaire (42), qui est attaché au boîtier (16) de l'encodeur (10) .
